# EUROPEAN PATENT SPECIFICATION

(11) **EP 3 671 410 B1**
(45) Date of publication and mention of the grant of the patent: **24.08.2022**
(21) Application number: 18214034.3
(22) Date of filing: 19.12.2018
(51) Int. Cl.: G06F 3/01, G02B 27/01, G06F 3/04842

(54) **METHOD AND DEVICE TO CONTROL A VIRTUAL REALITY DISPLAY UNIT**
VERFAHREN UND VORRICHTUNG ZUR STEUERUNG EINER ANZEIGEEINHEIT FÜR VIRTUELLE REALITÄT
PROCÉDÉ ET DISPOSITIF POUR COMMANDER UNE UNITÉ D'AFFICHAGE DE RÉALITÉ VIRTUELLE

(43) Date of publication of application: 24.06.2020
(73) Proprietor: Siemens Healthcare GmbH, 91052 Erlangen (DE)
(72) Inventor: Ebert, Anton, 90429 Nürnberg (DE); Hager, Florian, 91058 Erlangen (DE)

(56) References cited:
- WO-A1-2015/192117
- KR-A- 20180 066 468
- TW-A- 201 804 957
- US-A1- 2017 061 696
- US-A1- 2017 337 742
- US-B1- 6 329 986
- ADALBERTO L SIMEONE ET AL: "Substitutional reality", CROSSROADS, ACM, US, vol. 22, no. 1, 6 November 2015 (2015-11-06), pages 24-29, XP058074484, ISSN: 1528-4972, DOI: 10.1145/2810044

## Description

The invention describes a method and a device to control a virtual reality display unit, as well as a virtual reality display unit, especially for the use in a medical environment.

Virtual reality (or short "VR") is a technique where a simulated environment is shown to a user by a virtual reality display unit. The user may change the simulated environment by his actions. In addition to a visual feedback, most virtual reality display units also allow auditory or even haptic feedback. Current virtual reality display units are often virtual reality headsets or multi-projected environments, wherein headsets are preferred in the following.

While VR provides a (often nearly perfect) simulated environment, the surrounding "real world" is invisible to the user (in difference to augmented reality that is not a part of the further description). Thus, it is not possible to see, select or modify real-world objects (e.g. characteristics or position) which represent physical objects in a real room while being in virtual reality. Therefore, interaction with the real world room is very difficult while being in VR. Apart from the modification of real-world objects, it is difficult to prevent a person being in VR to walk against a real world object or to interact with for example a keyboard while being in VR.

Currently, there exist different solutions. One exemplary solution uses a tracker which is attached to a keyboard to see the keyboard while being in virtual reality. another exemplary solution provides the possibility to change for example the texture of a virtual landscape but it is not possible to include real-world objects into the scene and modify them.

The international patent application WO 2015/192117 A1 discloses configurations for presenting virtual reality and augmented reality experiences to users.

The US patent application US 2017/0061696 A1 discloses a display method for displaying a virtual reality image together with object information of real-world objects. The object information is acquired based on a binocular view of the user regarding the real-world object. In an embodiment, a virtual reality display apparatus may determine a display priority to determine a display method. In this case, a display priority list may be predetermined, and the virtual reality display apparatus may classify display priorities of a virtual object and a real-world object in the virtual reality according to importance and urgency. The display priority list may be automatically set by the virtual reality display apparatus or may be set by the user according to a pattern of use.

Adalberto L Simeone et al: "Substitutional reality", CROSSROADS, vol. 22, no. 1, 6 November 2015, p. 24-29, DOI: 10.1145/ 2810044 discloses studies related to substitutional reality, including pairing every object in a physical world, with some degree of discrepancy, to a contextually appropriate virtual object, and discusses different levels of mismatch between physical objects and their real counterpart.

It is therefore an object of the invention to provide an improved method and device to control a virtual reality display unit as well as a virtual reality display unit that overcome the problems described above.

This object is achieved by the method according to claim 1, the device according to claim 12, the virtual reality display unit according to claim 13, the computer program product according to claim 14 and the computer-readable medium according to claim 15.

A method according to the invention, to control a virtual reality display unit, comprises the steps according to independent claim 1.

A method to control a virtual reality display unit that is useful for understanding the invention comprises the following steps:
- Track the environment of a space surrounding the virtual reality display unit. The environment is the variety of real-world objects located in the tracked space. The space could generally be any space around the virtual reality display unit. Typically, the space is a certain room defined by walls (that could also be recognized as real-world objects), wherein this room is preferably used for a medical use. Generally the tracking of an environment is well known to the skilled person, preferred embodiments of this tracking are described more accurately in the following.
- Automatically identify and separate real-world objects of the tracked environment by forming virtual objects and providing an individual identification labels to the virtual objects. Here, real-world objects are recognized as objects and a virtual object is created with properties of a corresponding real-world object (at least in respect to position and geometry). The virtual object is then labelled by an individual identification label. How this is achieved in praxis, is well known to the skilled person. For example, a real-world object can be identified by detecting edges of a structure in an image and comparing them with a predefined set of templates (examples of objects). The recognized structure (pixels) in the image or the template could then be used as virtual object and be labelled with an individual number or name.
- Classify the virtual objects together with their individual identification label into an object-library. Especially, the virtual objects are cut out of the scene (preferred but not necessary) and receive an ID, e.g. an integer number, an address or a name. Although it is preferred that every virtual object is labelled, this is not necessary for all possible applications.
- Marking a number of virtual objects by linking an individual relevance-marker with each virtual object. This could be achieved by a user of the virtual reality display unit and/or automatically. In an example not covered by the claims, a binary marker with "1" for relevant and "0" for irrelevant could be applied to the virtual objects. It is preferred that every virtual object is marked, however, this is not necessary for all possible applications.
- Displaying the virtual objects of the object-library by the virtual reality display unit in dependence of their relevance-marker. The virtual objects are shown at the positions of the real-world objects. To achieve that, it is preferred to register the virtual objects with the real-world-objects tracked. Due to the tracking, the position and geometric dimensions of the real-world objects is well known. Due to the registration, the virtual objects will have the same geometric dimensions, the same position (and the same orientation) as the real world objects. Thus, they will be exactly displayed there, where the real-world objects would be seen. The relevance of the virtual objects in the object library can be determined based on the relevance-marker or derived directly from the relevance-marker (see e.g. above example with the binary relevance-marker).

It should be noted that the surrounding "real world" is invisible to the user. Thus, the displaying step is not meant to be a display in the manner of augmented reality, but a display of virtual reality. Thus, it is not possible to see real-world objects in a real room by the virtual reality display unit, but only virtual objects that are displayed.

It is preferred that for keeping an accurate positioning of the virtual objects, the above tracking step together with a registration of the displayed virtual objects with the real-world objects is repeated at least in the case the virtual reality display device is moved. This is described below more accurately.

A device according to the invention, to control a virtual reality display unit, comprises the components according to independent claim 11.

A device to control a virtual reality display unit that is useful for understanding the invention comprises the following components:
- A tracking unit designed to track the environment of a space surrounding the virtual reality display unit. Such tracking unit is well known in the art and is often arranged on the virtual reality device or on the user of this device. Typically the tracking is achieved by using infrared light.
- An identification unit designed to automatically identify and separate real-world objects of the tracked environment by forming virtual objects and providing individual identification labels to the virtual objects.
- A classification unit designed to classify the virtual objects together with their individual identification label into an object-library.
- A marking unit designed to mark a number of virtual objects by a user of the virtual reality display unit and/or automatically by linking an individual relevance-marker with each virtual object.
- A data interface designed to communicate with the virtual reality display unit in a way to display the virtual objects of the object-library by the virtual reality display unit in dependence of their relevance-marker.

A virtual reality display unit according to the invention, comprises a device according to the invention, wherein the components of the device are preferably arranged in the housing of the virtual reality display unit.

A medical device, e.g. a medical measuring device and/or a medical imaging device (e.g. a magnetic resonance imaging system or an X-ray computed tomography system) according to the invention comprises a device according to the invention and a data interface designed to connect with a virtual reality display unit.

The invention has the advantage that relevant objects of the real world can be displayed in virtual reality, wherein an interaction with these objects is possible. Another advantage is that irrelevant objects could be omitted in the display of the virtual reality display unit or that their visual characteristics could be changed (e.g. with a uniform texture to prevent bumping into real-world objects). This especially enhances the recording of trainings in hospitals. The invention is especially designed for medical use.

The units or modules of the device mentioned above, can be completely or partially realised as software modules running on a processor of a computing unit. A realisation largely in the form of software modules can have the advantage that applications already installed on an existing system can be updated, with relatively little effort, to install and run the method of the present application. The object of the invention is also achieved by a computer program product with a computer program that is directly loadable into the memory of a computing unit, and which comprises program units to perform the steps of the inventive method when the program is executed by the control unit. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a processor unit of a computing unit. A processor unit can comprise one or more microprocessors or their equivalents.

Particularly advantageous embodiments and features of the invention are given by the dependent claims, as revealed in the following description. Features of different claim categories may be combined as appropriate to give further examples that are not necessarily covered by the claims and may not be described herein.

According to a preferred method, in order to track the environment of a space surrounding the virtual reality display unit, a scan with a default overlay grid of a light pattern is performed. This has the advantage that due to the coordinate data of the light-grid, the position and the geometric shape of the real-world objects can be scanned very accurately. Preferably an infrared grid is projected over the environment of the space, since infrared can be advantageously be detected and is invisible for humans. It is further preferred that real-world objects existing in the space (forming the environment) are shown with the default overlay grid in the virtual reality display unit.

A preferred method comprises the following steps:
- checking, if the environment of the tracked space or the space to be tracked, has been tracked before, and if positive
- searching an existing object-library of virtual objects of this space, and using these virtual objects in the case that the search was positive.

This has the advantage that in the case a space has been scanned before, e.g. an operation room where most of the furniture and other objects in the room are typically not moved, stored data of the object of the environment could be used. Thus, it is not necessary to perform complex calculations to recognize objects in that environment. One could simply use results of former scans. The method could check position data of the scanned space (where the tracked environment is positioned), e.g. by using a WLAN Access Point with an individual identification, and use this check to determine whether there are already stored virtual objects according to the scanned space or not. Alternatively, there can occur a tracking step and after that tracking a short evaluation could be made if the overall shape of the tracked environment matches a known shape tracked before.

According to a preferred method, in the case the search of an existing object-library was positive and a real-world object has been tracked at the position of a virtual object of the object-library and is identified as this virtual object, a stored relevance-marker of this virtual object is searched and the virtual object of the object-library is automatically assigned with this relevance-marker. This has the advantage that in a room already "known", a former marking of virtual objects can be used as preference. Thus, in the case a physician often works in an operation room, it is not necessary to mark virtual objects every time, but simply use the settings of the last time.

It is also possible to apply this preferred method for a group of virtual objects. Any time a virtual object of a special shape is tracked (e.g. a table), it automatically is assigned to a relevance marker that is applied to the same group of virtual objects (e.g. all tables tracked). For example, every time a predefined virtual object (e.g. table) is tracked, it gets a predefined relevance-marker reserved for this sort of virtual objects.

Thus, the object-library can be used to link real-world objects with similar virtual objects of the object-library in order to overtake their characteristics. The advantage is that it can be achieved to match real world objects and virtual assets (e.g. in a Hybrid-Simulation).

According to a preferred method, the environment of the space surrounding the virtual reality display unit is tracked at least one more time.

In this case the tracking preferably is performed with a different position of the virtual reality display unit in the space and/or with a different angle of view of the virtual reality display unit. This has the advantage that the environment can be tracked more accurately, wherein especially shadowing is prevented and/or triangulation is possible.

As a preferred alternative or addition, the tracking is performed to check if the geometry of virtual objects of the object-library is matching the geometry of the respective real-world-objects. This also enhances the quality of the object-library.

Alternatively or additionally, the tracking is preferably used to automatically identify and separate further real-world objects of the tracked environment in forming virtual objects and providing an individual identification label to the new identified virtual objects. This is especially advantageous in the case stored virtual objects are used based on a former tracking. Due to the second tracking it could be determined if some of the real-world objects have been moved, added or removed.

According to a preferred method, the marking of virtual objects is performed by a user of the virtual reality display unit (e.g. additionally to an automatic marking). The virtual objects to be marked are shown as items of the object-library and/or are displayed by the virtual reality display unit (as objects). While displaying virtual objects, they are preferably displayed in a position corresponding to the position of the respective real-world objects in the environment and/or preferably as a picture of the real-world object or as a picture of an artificial object. Especially, in the case, there is existing a picture of an artificial object, a similar virtual object is displayed by using this picture. In the case there is no such picture found, a photography (picture of the real-world object) is displayed for the virtual object.

According to a preferred method, the virtual objects of the object-library are shown by the virtual reality display unit for marking and/or are not shown by the virtual reality display unit prior marking and are marked independently to the display of the virtual reality display unit. For this preferred method it is particularly preferred that a user could switch between these two possibilities for marking. Thus, instead of showing all objects and select objects of interests afterwards it could be also done the other way around and first select the objects of interest and then show them in VR. It is also possible to show a list of (virtual) objects and selecting one of the list.

According to a preferred method, the marking is performed by eye tracking (e.g. focussing), touching (e.g. shock/delay or hand tracking), with a input device, with gestures (e.g. hand tracking) or with verbal commands.

According to the invention, the virtual objects are marked with a relevance-marker more complex than a binary marker i.e. this relevance-marker can have more than two possible states. This could be a number, by a word or by several (binary, numeric or literal) relevance-markers. It is preferred that the relevance-markers are designed such that the relevance of the virtual objects can directly be derived from this relevance-marker. The virtual objects of the object-library are shown by the virtual reality display unit in different shapes or not at all in dependence of their relevance (e.g. directly depending from their relevance-marker). For example, if the relevance-marker is zero, the virtual object is not shown at all and the higher the numeric value of the relevance-marker is the more details are shown while displaying the virtual object.

In particular it is preferred that a virtual object is not shown if its relevance lies under a predefined value and/or the virtual object is shown with a predefined texture (especially with more details the higher the relevance is) if its relevance lies between a first range of values and/or the virtual object is shown as image or video of the real object if its relevance lies between a second range of values. This image or video is preferably registered with the real-world object. It should be noted that "relevance" could be a value derived from the corresponding relevance-marker or the value of the corresponding relevance-marker itself.

This has the advantage that after selecting the objects, the physical/logical behaviour (characteristics) of virtual objects can be defined. In case the objects are irrelevant, they can be suppressed. If the point is just to see the objects (for example not walk against them), an arbitrary texture is sufficient. In the case the objects are important (e.g. for recording) a video-streaming option could be applied to see the real-world objects and e.g. measured values on a screen of this real-world object.

According to a preferred method, depending on its relevance a virtual object is shown as a real-time video stream of the real object, wherein this video stream is preferably registered with the real-world object. The expression "registered" means that the position and geometric shape of the picture of the real-world object in the video stream (or above image) matches the position and geometric shape of the real-world object. Since the virtual object will be seen in VR at the same position as the real-world-object, it seems that in VR the real-world object will be at the correct position as seen from the position of the virtual reality display unit.

According to a preferred method, additional virtual objects are shown by the virtual reality display unit together with the virtual objects corresponding to real-world objects, wherein the additional virtual objects do not belong to the environment of the space.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a block diagram of an example of the method according to the invention,
Fig. 2 outlines a preferred device according to the invention,
Fig. 3 shows a scene clarifying the method according to the invention,
Fig. 4 shows another scene clarifying the method according to the invention,
Fig. 5 shows another scene clarifying the method according to the invention,
Fig. 6 shows another scene clarifying the method according to the invention.

In the diagrams, like numbers refer to like objects throughout. Objects in the diagrams are not necessarily drawn to scale.

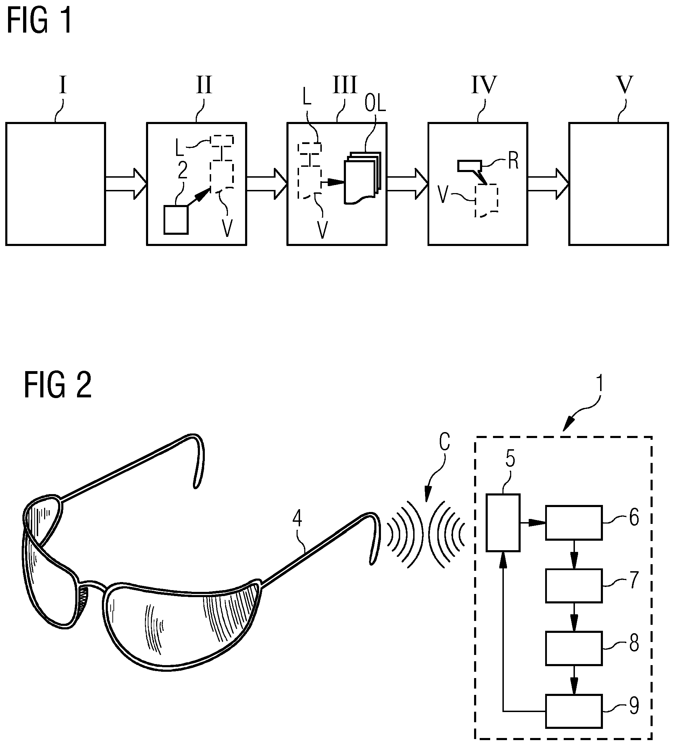

Fig. 1 shows a block diagram of an example of the method to control a virtual reality display unit 4 (see figure 2) according to the invention. The steps of the method are illustrated with boxes.

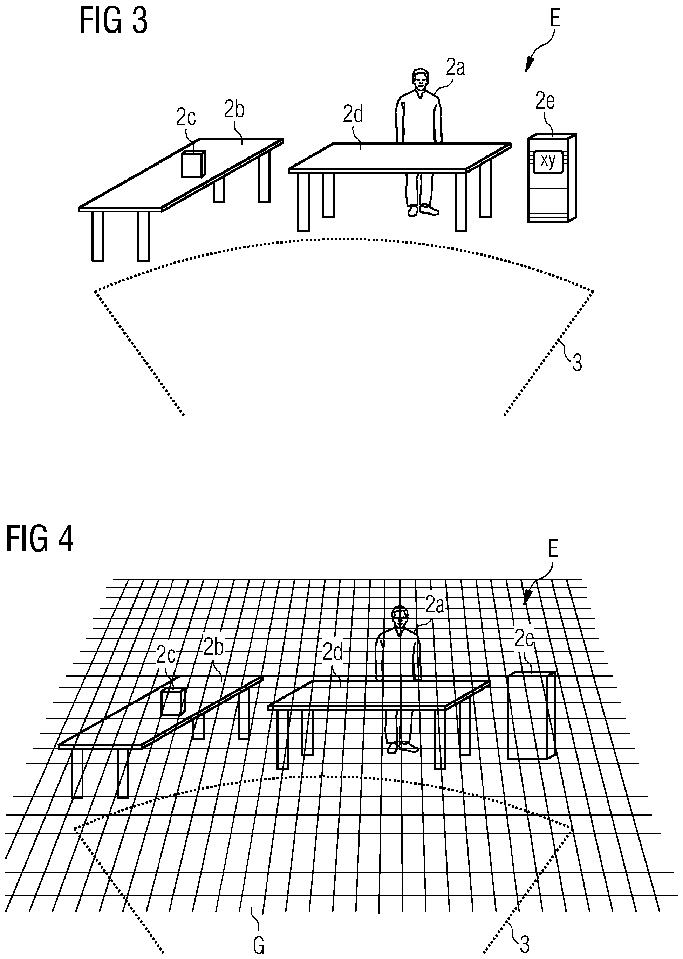

In step I, the environment E (see e.g. figure 3) of a space surrounding the virtual reality display unit 4 is tracked.

In step II, real-world objects 2 of the tracked environment E are automatically identified and separated in forming virtual objects V. These virtual objects V are provided with individual identification labels L.

In step III, the virtual objects V are classified together with their individual identification labels L into an object-library OL.

In step IV a number of virtual objects V are marked by linking an individual relevance-marker R with each virtual object V. This could be achieved by a user of the virtual reality display unit 4 and/or automatically.

In step V, the virtual objects V of the object-library OL are shown by the virtual reality display unit 4 in dependence of their relevance-marker R.

Fig. 2 outlines a preferred device 1 to control a virtual reality display unit 4. In the figure, the virtual reality display unit 4 is connected with the device 1 via a wireless data connection C. The device comprises the following components:
- A tracking unit 6 designed to track the environment E of a space surrounding the virtual reality display unit 4. For all Reference signs not shown in Figure 2, see Figures 3 to 6 displaying the process sequence.
- An identification unit 7 designed to automatically identify and separate real-world objects 2, 2a, 2b, 2c, 2d, 2e of the tracked environment E in forming virtual objects V, V1, V2, V3, V4, V5, V6, V7 and providing individual identification labels L, L1, L2, L3, L4, L5 to the virtual objects V, V1, V2, V3, V4, V5, V6, V7.
- A classification unit 8 designed to classify the virtual objects V, V1, V2, V3, V4, V5, V6, V7 together with their individual identification label L, L1, L2, L3, L4, L5 into an object-library OL.
- A marking unit 9 designed to mark a number of virtual objects V, V1, V2, V3, V4, V5, V6, V7 by a user of the virtual reality display unit 4 and/or automatically by linking an individual relevance-marker R with each virtual object V, V1, V2, V3, V4, V5, V6, V7.
- A data interface 5, here a wireless data interface, designed to communicate with the virtual reality display unit 4 in a way to show the virtual objects V, V1, V2, V3, V4, V5, V6, V7 of the object-library OL by the virtual reality display unit 4 in dependence of their relevance-marker R.

Figures 3 to 6 show a scene clarifying the course of the method according to the invention.

In figure 3, a possible environment E is shown that could be seen in the field of view 3 (FOV) of a virtual reality display unit 4 (see e.g. figure 2). There are different real-world objects 2a, 2b, 2c, 2d, 2e standing in a room. One "object" is a person 2a standing behind a table 2d. At the right side of the picture is a medical apparatus 2e showing a value of a measurement on its screen. At the left side of the picture, there is another table 2b with a box 2c standing on it.

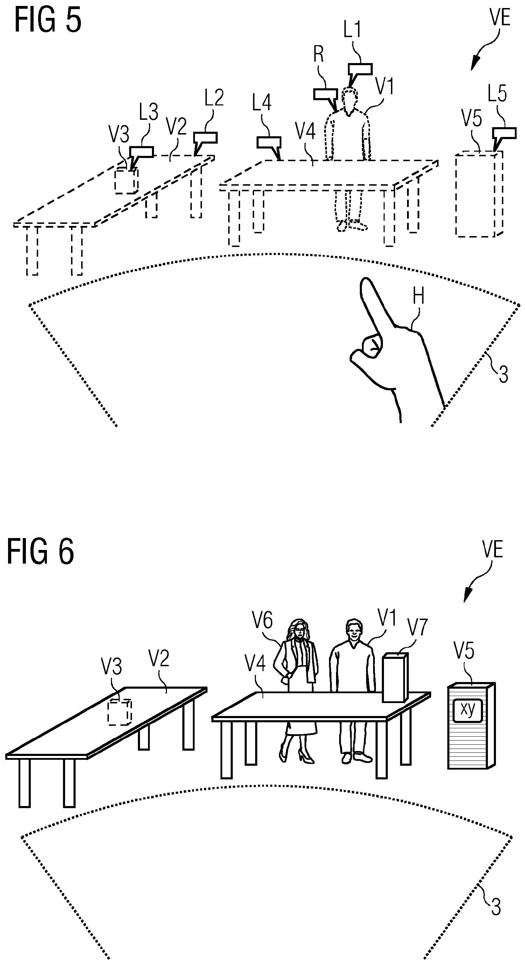

In figure 4, the environment E shown in figure 3 is tracked by overlaying a grid G formed by infrared light over the environment E. In the course of tracking, the real-world objects 2, 2a, 2b, 2c, 2d, 2e of the tracked environment E are identified and virtual objects V1, V2, V3, V4, V5 are formed (see figure 5).

In contrast to figures 3 and 4 that are showing the real world, figures 5 and 6 are showing a virtual environment VE. Thus, this is the scene that a user of a virtual reality display unit would see.

In figure 5, the identified virtual objects V1, V2, V3, V4, V5 are shown in a transparent way (dashed lines) together with labels L1, L2, L3, L4, L5. In order to mark a number of virtual objects V1, V2, V3, V4, V5, a user of the virtual reality display device points with his hand H at a number of virtual objects V1, V2, V3, V4, V5 shown in the virtual environment.

In figure 6, the virtual objects V1, V2, V3, V4, V5 are marked relevant, very relevant or not relevant at all by the user. Thus, from the left to the right, the left virtual table V2 is shown (however not very detailed) so that the user does not run into its counterpart in real-world while moving through the room. Since the virtual box V3 on the table is of no interest, it has been omitted from the virtual environment (dashed-pointed lines mean here that the object is not shown). The virtual table V4 in the middle is displayed together with a virtual avatar V1 of the person 2a. In this example, another avatar V6 is standing at the virtual table V4 and additionally a virtual box V7 is arranged on it.

At the right side, a real time video of the medical apparatus 2e is shown as virtual medical apparatus V5 in order that the user may read the measured values (from the real world) in the virtual environment VE.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The mention of a "unit" or a "device" does not preclude the use of more than one unit or module.

## Claims

1. A method to control a virtual reality display unit (4), comprising the steps:
- track (step I) the environment (E) of a space surrounding the virtual reality display unit (4),
- automatically identify and separate (step II) real-world objects (2, 2a, 2b, 2c, 2d, 2e) of the tracked environment (E) by forming virtual objects (V, V1, V2, V3, V4, V5, V6, V7) and providing individual identification labels (L, L1, L2, L3, L4, L5) to the virtual objects (V, V1, V2, V3, V4, V5, V6, V7),
- classify (step III) the virtual objects (V, V1, V2, V3, V4, V5, V6, V7) together with their individual identification labels (L, L1, L2, L3, L4, L5) into an object-library (OL),
- marking (step IV) a number of virtual objects (V, V1, V2, V3, V4, V5, V6, V7), by a user of the virtual reality display unit (4) and/or automatically, by linking an individual relevance-marker (R) with each virtual object (V, V1, V2, V3, V4, V5, V6, V7),
wherein the virtual objects (V, V1, V2, V3, V4, V5, V6, V7) are marked with relevance-markers (R), wherein a relevance of each virtual object (V, V1, V2, V3, V4, V5, V6, V7) can be derived directly from its relevance-marker,
- displaying (step V) the virtual objects (V, V1, V2, V3, V4, V5, V6, V7) of the object-library (OL) by the virtual reality display unit (4) dependent on relevance-markers (R),
wherein a surrounding "real world" is invisible to the user,
**characterised in that** the relevance-marker (R) for each virtual object has more than two possible states, **in that** in the displaying (step V) the virtual objects (V, V1, V2, V3, V4, V5, V6, V7) of the object-library (OL) are shown by the virtual reality display unit (4) in different shapes or not at all dependent on their relevance,
and **in that** a virtual object (V, V1, V2, V3, V4, V5, V6, V7) is not shown if its relevance lies under a predefined value, the virtual object (V, V1, V2, V3, V4, V5, V6, V7) is shown with a predefined texture if its relevance lies between a first range of values, and
the virtual object (V, V1, V2, V3, V4, V5, V6, V7) is shown as image of the real-world object if its relevance lies between a second range of values.

2. The method according to claim 1, wherein in order to track the environment (E) of a space surrounding the virtual reality display unit (4), a scan with a default overlay grid of a light pattern is performed, wherein preferably an infrared grid is projected over the environment (E) of the space, and preferably wherein real-world objects (2, 2a, 2b, 2c, 2d, 2e) existing in the space are shown with the default overlay grid in the virtual reality display unit (4).

3. The method according to any of the preceding claims, comprising the steps:
- checking, if the environment (E) of the tracked space or the space to be tracked, has been tracked before, and if positive
- searching an existing object-library (OL) of virtual objects (V, V1, V2, V3, V4, V5, V6, V7) of this space, and using these virtual objects (V, V1, V2, V3, V4, V5, V6, V7) in the case that the search was positive.

4. The method according to claim 3, wherein in the case the search of an existing object-library (OL) was positive and a real-world object (2, 2a, 2b, 2c, 2d, 2e) has been tracked at the position of a virtual object (V, V1, V2, V3, V4, V5, V6, V7) of the object-library (OL) and is identified as this virtual object (V, V1, V2, V3, V4, V5, V6, V7), a stored relevance-marker (R) of this virtual object (V, V1, V2, V3, V4, V5, V6, V7) is searched and the virtual object (V, V1, V2, V3, V4, V5, V6, V7) of the object-library (OL) is automatically assigned with this relevance-marker (R).

5. The method according to any of the preceding claims, wherein the environment (E) of the space surrounding the virtual reality display unit (4) is tracked at least one more time,
wherein the tracking preferably
- is performed with a different position of the virtual reality display unit (4) in the space and/or with a different angle of view of the virtual reality display unit (4), and/or
- is checking if the geometry of virtual objects (V, V1, V2, V3, V4, V5, V6, V7) of the object-library (OL) is matching the geometry of the respective real-world-objects (2, 2a, 2b, 2c, 2d, 2e) and/or
- is used to automatically identify and separate further real-world objects (2, 2a, 2b, 2c, 2d, 2e) of the tracked environment (E) in forming virtual objects (V, V1, V2, V3, V4, V5, V6, V7) and providing an individual identification label (L, L1, L2, L3, L4, L5) to the new identified virtual objects (V, V1, V2, V3, V4, V5, V6, V7).

6. The method according to any of the preceding claims, wherein the marking of virtual objects (V, V1, V2, V3, V4, V5, V6, V7) is performed by a user of the virtual reality display unit (4) and the virtual objects (V, V1, V2, V3, V4, V5, V6, V7) to be marked
- are shown as items of the object-library (OL) and/or
- are displayed by the virtual reality display unit (4), preferably in a position corresponding to the position of the respective real-world objects (2, 2a, 2b, 2c, 2d, 2e) in the environment (E) and/or preferably as a picture of the real-world object (2, 2a, 2b, 2c, 2d, 2e) or as a picture of an artificial object.

7. The method according to any of the preceding claims, wherein the virtual objects (V, V1, V2, V3, V4, V5, V6, V7) of the object-library (OL) are shown by the virtual reality display unit (4) for marking and/or are not shown by the virtual reality display unit (4) prior marking and are marked independently to the display of the virtual reality display unit (4), wherein it is preferred that a user could switch between these two possibilities for marking.

8. The method according to any of the preceding claims, wherein the marking is performed by eye tracking, touching, with a input device, with gestures or with verbal commands.

9. The method according to any of the preceding claims, wherein depending on its relevance a virtual object (V, V1, V2, V3, V4, V5, V6, V7) is shown as a real-time video stream of the real-world object (2, 2a, 2b, 2c, 2d, 2e), wherein this video stream is preferably registered with the real-world object (2, 2a, 2b, 2c, 2d, 2e).

10. The method according to any of the preceding claims, wherein additional virtual objects (V6, V7) are shown by the virtual reality display unit (4) together with the virtual objects (V, V1, V2, V3, V4, V5) corresponding to real-world objects (2, 2a, 2b, 2c, 2d, 2e), wherein the additional virtual objects (V6, V7) do not belong to the environment (E) of the space.

11. A device (1) to control a virtual reality display unit (4), comprising:
- a tracking unit (6) designed to track (step I) the environment (E) of a space surrounding the virtual reality display unit (4),
- an identification unit (7) designed to automatically identify and separate (step II) real-world objects (2, 2a, 2b, 2c, 2d, 2e) of the tracked environment (E) by forming virtual objects (V, V1, V2, V3, V4, V5, V6, V7) and providing individual identification labels (L, L1, L2, L3, L4, L5) to the virtual objects (V, V1, V2, V3, V4, V5, V6, V7),
- a classification unit (8) designed to classify (step III) the virtual objects (V, V1, V2, V3, V4, V5, V6, V7) together with their individual identification labels (L, L1, L2, L3, L4, L5) into an object-library (OL),
- a marking unit (9) designed to mark (step IV) a number of virtual objects (V, V1, V2, V3, V4, V5, V6, V7), by a user of the virtual reality display unit (4) and/or automatically, by linking an individual relevance-marker (R) with each virtual object (V, V1, V2, V3, V4, V5, V6, V7), wherein the virtual objects (V, V1, V2, V3, V4, V5, V6, V7) are marked with relevance-markers wherein a relevance of each virtual object (V, V1, V2, V3, V4, V5, V6, V7) can be derived directly from its relevance-marker,
- a data interface (5) designed to communicate with the virtual reality display unit (4) in a way to display (step V) the virtual objects (V, V1, V2, V3, V4, V5, V6, V7) of the object-library (OL) by the virtual reality display unit (4) dependent on relevance-markers (R), wherein a surrounding "real world" is invisible to the user, **characterised in that** the relevance-marker (R) for each virtual object has more than two possible states, **in that** the data interface (5) is designed to communicate with the virtual reality display unit (4) in a way to display (step V) the virtual objects (V, V1, V2, V3, V4, V5, V6, V7) of the object-library (OL) by the virtual reality display unit (4) in different shapes or not at all dependent on their relevance, such that a virtual object (V, V1, V2, V3, V4, V5, V6, V7) is not shown if its relevance lies under a predefined value, the virtual object (V, V1, V2, V3, V4, V5, V6, V7) is shown with a predefined texture if its relevance lies between a first range of values, and the virtual object (V, V1, V2, V3, V4, V5, V6, V7) is shown as image of the real-world object if its relevance lies between a second range of values.

12. A virtual reality display unit (4) comprising a device (1) according to claim 11, wherein the components of the device (1) are preferably arranged in the housing of the virtual reality display unit (4).

13. A computer program product comprising a computer program that is directly loadable into a memory of a computer unit in communication with a device according to claim 11 and which comprises program elements for performing steps of the method according to any of claims 1 to 10 when the computer program is executed by the computer unit.

14. A computer-readable medium on which is stored program elements that can be read and executed by a computer unit in communication with a device according to claim 11 in order to perform steps of the method according to any of claims 1 to 10 when the program elements are executed by the computer unit.

## Patentansprüche

1. Verfahren zum Steuern einer Virtual-Reality-Anzeigeeinheit (4), das die folgenden Schritte umfasst:
- Verfolgen (Schritt I) der Umgebung (E) eines die Virtual-Reality-Anzeigeeinheit (4) umgebenden Raums,
- automatisches Identifizieren und Separieren (Schritt II) von realen Objekten (2, 2a, 2b, 2c, 2d, 2e) der verfolgten Umgebung (E) durch Bilden virtueller Objekte (V, V1, V2, V3, V4, V5, V6, V7) und Versehen der virtuellen Objekte (V, V1, V2, V3, V4, V5, V6, V7) mit individuellen Identifikationskennzeichnungen (L, L1, L2, L3, L4, L5),
- Klassifizieren (Schritt III) der virtuellen Objekte (V, V1, V2, V3, V4, V5, V6, V7) zusammen mit ihren individuellen Identifikationskennzeichnungen (L, L1, L2, L3, L4, L5) in eine Objektbibliothek (OL),
- Markieren (Schritt IV) einer Anzahl von virtuellen Objekten (V, V1, V2, V3, V4, V5, V6, V7) durch einen Benutzer der Virtual-Reality-Anzeigeeinheit (4) und/oder automatisch durch Verknüpfen einer individuellen Relevanzmarkierung (R) mit jedem virtuellen Objekt (V, V1, V2, V3, V4, V5, V6, V7), wobei die virtuellen Objekte (V, V1, V2, V3, V4, V5, V6, V7) mit Relevanzmarkierungen (R) markiert werden, wobei eine Relevanz jedes virtuellen Objekts (V, V1, V2, V3, V4, V5, V6, V7) direkt von seiner Relevanzmarkierung abgeleitet werden kann,
- Anzeigen (Schritt V) der virtuellen Objekte (V, V1, V2, V3, V4, V5, V6, V7) der Objektbibliothek (OL) durch die Virtual-Reality-Anzeigeeinheit (4) abhängig von ihren Relevanzmarkierungen (R),
wobei eine umgebende "reale Welt" für den Benutzer nicht sichtbar ist,
**dadurch gekennzeichnet, dass** die Relevanzmarkierung (R) für jedes virtuelle Objekt mehr als zwei mögliche Zustände aufweist, dass das Anzeigen (Schritt V) der virtuellen Objekte (V, V1, V2, V3, V4, V5, V6, V7) der Objektbibliothek (OL) durch die Virtual-Reality-Anzeigeeinheit (4) abhängig von ihrer Relevanz in unterschiedlichen Formen oder gar nicht angezeigt werden, dass ein virtuelles Objekt (V, V1, V2, V3, V4, V5, V6, V7) nicht angezeigt wird, wenn seine Relevanz unter einem vordefinierten Wert liegt, das virtuelle Objekt (V, V1, V2, V3, V4, V5, V6, V7) mit einer vordefinierten Textur gezeigt wird, wenn seine Relevanz zwischen einem ersten Bereich von Werten liegt, und das virtuelle Objekt (V, V1, V2, V3, V4, V5, V6, V7) als Bild des realen Objekts gezeigt wird, wenn seine Relevanz zwischen einem zweiten Bereich von Werten liegt.

2. Verfahren nach Anspruch 1, wobei zum Verfolgen der Umgebung (E) eines die Virtual-Reality-Anzeigeeinheit (4) umgebenden Raums ein Scan mit einem vorgegebenen Überlagerungsraster eines Lichtmusters durchgeführt wird, wobei bevorzugt ein Infrarotraster über die Umgebung (E) des Raums projiziert wird und wobei bevorzugt reale Objekte (2, 2a, 2b, 2c, 2d, 2e), die in dem Raum vorhanden sind, in der Virtual-Reality-Anzeigeeinheit (4) mit dem vorgegebenen Überlagerungsraster gezeigt werden.

3. Verfahren nach einem der vorhergehenden Ansprüche, das die folgenden Schritte umfasst:
- Prüfen, ob die Umgebung (E) des verfolgten Raums oder des zu verfolgenden Raums bereits zuvor verfolgt wurde, und falls positiv
- Suchen nach einer bestehenden Objektbibliothek (OL) von virtuellen Objekten (V, V1, V2, V3, V4, V5, V6, V7) dieses Raums und Verwenden dieser virtuellen Objekte (V, V1, V2, V3, V4, V5, V6, V7), falls die Suche positiv war.

4. Verfahren nach Anspruch 3, wobei, falls die Suche nach einer bestehenden Objektbibliothek (OL) positiv war und ein reales Objekt (2, 2a, 2b, 2c, 2d, 2e) an der Position des virtuellen Objekts (V, V1, V2, V3, V4, V5, V6, V7) der Objektbibliothek (OL) verfolgt wurde und als dieses virtuelle Objekt (V, V1, V2, V3, V4, V5, V6, V7) identifiziert wird, nach einer gespeicherten Relevanzmarkierung (R) dieses virtuellen Objekts (V, V1, V2, V3, V4, V5, V6, V7) gesucht wird und das virtuelle Objekt (V, V1, V2, V3, V4, V5, V6, V7) der Objektbibliothek (OL) automatisch dieser Relevanzmarkierung (R) zugewiesen wird.

5. Verfahren nach einem der vorhergehenden Ansprüche, wobei die Umgebung (E) des die Virtual-Reality-Anzeigeeinheit (4) umgebenden Raums mindestens ein weiteres Mal verfolgt wird, wobei das Verfolgen bevorzugt
- mit einer anderen Position der Virtual-Reality-Anzeigeeinheit (4) in dem Raum und/oder mit einem anderen Blickwinkel der Virtual-Reality-Anzeigeeinheit (4) durchgeführt wird und/oder
- Prüfen ist, ob die Geometrie virtueller Objekte (V, V1, V2, V3, V4, V5, V6, V7) der Objektbibliothek (OL) mit der Geometrie der jeweiligen realen Objekte (2, 2a, 2b, 2c, 2d, 2e) übereinstimmt und/oder
- verwendet wird zum automatischen Identifizieren und Separieren weiterer realer Objekte (2, 2a, 2b, 2c, 2d, 2e) der verfolgten Umgebung (E) beim Bilden virtueller Objekte (V, V1, V2, V3, V4, V5, V6, V7) und Versehen der neuen identifizierten virtuellen Objekte (V, V1, V2, V3, V4, V5, V6, V7) mit einer individuellen Identifikationskennzeichnung (L, L1, L2, L3, L4, L5).

6. Verfahren nach einem der vorhergehenden Ansprüche, wobei das Markieren von virtuellen Objekten (V, V1, V2, V3, V4, V5, V6, V7) durch einen Benutzer der Virtual-Reality-Anzeigeeinheit (4) durchgeführt wird und die zu markierenden virtuellen Objekte (V, V1, V2, V3, V4, V5, V6, V7)
- als Elemente der Objektbibliothek (OL) gezeigt werden und/oder
- durch die Virtual-Reality-Anzeigeeinheit (4) bevorzugt an einer Position, die der Position der jeweiligen realen Objekte (2, 2a, 2b, 2c, 2d, 2e) in der Umgebung (E) entspricht, und/oder bevorzugt als Bild der realen Objekte (2, 2a, 2b, 2c, 2d, 2e) oder als Bild eines künstlichen Objekts angezeigt werden.

7. Verfahren nach einem der vorhergehenden Ansprüche, wobei die virtuellen Objekte (V, V1, V2, V3, V4, V5, V6, V7) der Objektbibliothek (OL) durch die Virtual-Reality-Anzeigeeinheit (4) zum Markieren gezeigt werden und/oder durch die Virtual-Reality-Anzeigeeinheit (4) vor dem Markieren nicht gezeigt werden und unabhängig von der Anzeige der Virtual-Reality-Anzeigeeinheit (4) markiert werden,
wobei es bevorzugt wird, dass ein Benutzer zwischen diesen zwei Möglichkeiten zum Markieren wechseln könnte.

8. Verfahren nach einem der vorhergehenden Ansprüche, wobei das Markieren durch Eye-Tracking, Berührung, mit einer Eingabevorrichtung, mit Gesten oder mit Sprachbefehlen durchgeführt wird.

9. Verfahren nach einem der vorhergehenden Ansprüche, wobei ein virtuelles Objekt (V, V1, V2, V3, V4, V5, V6, V7) abhängig von seiner Relevanz als ein Echtzeit-Videostream des realen Objekts (2, 2a, 2b, 2c, 2d, 2e) gezeigt wird, wobei dieser Videostream bevorzugt mit dem realen Objekt (2, 2a, 2b, 2c, 2d, 2e) registriert ist.

10. Verfahren nach einem der vorhergehenden Ansprüche, wobei zusätzliche virtuelle Objekte (V6, V7) durch die Virtual-Reality-Anzeigeeinheit (4) zusammen mit den virtuellen Objekten (V, V1, V2, V3, V4, V5), die den realen Objekten (2, 2a, 2b, 2c, 2d, 2e) entsprechen, gezeigt werden, wobei die zusätzlichen virtuellen Objekte (V6, V7) nicht zu der Umgebung (E) des Raums gehören.

11. Vorrichtung (1) zum Steuern einer Virtual-Reality-Anzeigeeinheit (4), die Folgendes umfasst:
- eine Verfolgungseinheit (6), ausgelegt zum Verfolgen (Schritt I) der Umgebung (E) eines die Virtual-Reality-Anzeigeeinheit (4) umgebenden Raums,
- eine Identifikationseinheit (7), ausgelegt zum automatischen Identifizieren und Separieren (Schritt II) von realen Objekten (2, 2a, 2b, 2c, 2d, 2e) der verfolgten Umgebung (E) durch Bilden virtueller Objekte (V, V1, V2, V3, V4, V5, V6, V7) und Versehen der virtuellen Objekte (V, V1, V2, V3, V4, V5, V6, V7) mit individuellen Identifikationskennzeichnungen (L, L1, L2, L3, L4, L5),
- eine Klassifikationseinheit (8), ausgelegt zum Klassifizieren (Schritt III) der virtuellen Objekte (V, V1, V2, V3, V4, V5, V6, V7) zusammen mit ihren individuellen Identifikationskennzeichnungen (L, L1, L2, L3, L4, L5) in eine Objektbibliothek (OL),
- eine Markierungseinheit (9), ausgelegt zum Markieren (Schritt IV) einer Anzahl von virtuellen Objekten (V, V1, V2, V3, V4, V5, V6, V7) durch einen Benutzer der Virtual-Reality-Anzeigeeinheit (4) und/oder automatisch durch Verknüpfen einer individuellen Relevanzmarkierung (R) mit jedem virtuellen Objekt (V, V1, V2, V3, V4, V5, V6, V7), wobei die virtuellen Objekte (V, V1, V2, V3, V4, V5, V6, V7) mit Relevanzmarkierungen (R) markiert werden, wobei eine Relevanz jedes virtuellen Objekts (V, V1, V2, V3, V4, V5, V6, V7) direkt von seiner Relevanzmarkierung abgeleitet werden kann,
- eine Datenschnittstelle (5), ausgelegt zum derartigen Kommunizieren mit der Virtual-Reality-Anzeigeeinheit (4), dass die virtuellen Objekte (V, V1, V2, V3, V4, V5, V6, V7) der Objektbibliothek (OL) durch die Virtual-Reality-Anzeigeeinheit (4) abhängig von ihren Relevanzmarkierungen (R) angezeigt werden (Schritt V),
wobei eine umgebende "reale Welt" für den Benutzer nicht sichtbar ist,
**dadurch gekennzeichnet, dass** die Relevanzmarkierung (R) für jedes virtuelle Objekt mehr als zwei mögliche Zustände aufweist, dass die Datenschnittstelle (5) dazu ausgelegt ist, derart mit der Virtual-Reality-Anzeigeeinheit (4) zu kommunizieren, dass die virtuellen Objekte (V, V1, V2, V3, V4, V5, V6, V7) der Objektbibliothek (OL) durch die Virtual-Reality-Anzeigeeinheit (4) abhängig von ihrer Relevanz in unterschiedlichen Formen oder gar nicht angezeigt werden, und derart, dass ein virtuelles Objekt (V, V1, V2, V3, V4, V5, V6, V7) nicht angezeigt wird, wenn seine Relevanz unter einem vordefinierten Wert liegt, das virtuelle Objekt (V, V1, V2, V3, V4, V5, V6, V7) mit einer vordefinierten Textur gezeigt wird, wenn seine Relevanz zwischen einem ersten Bereich von Werten liegt, und das virtuelle Objekt (V, V1, V2, V3, V4, V5, V6, V7) als Bild des realen Objekts gezeigt wird, wenn seine Relevanz zwischen einem zweiten Bereich von Werten liegt (Schritt V).

12. Virtual-Reality-Anzeigeeinheit (4), die eine Vorrichtung (1) nach Anspruch 11 umfasst, wobei die Komponenten der Vorrichtung (1) bevorzugt in dem Gehäuse der Virtual-Reality-Anzeigeeinheit (4) angeordnet sind.

13. Computerprogrammprodukt, das ein Computerprogramm umfasst, das direkt in einen Speicher einer Computereinheit in Kommunikation mit einer Vorrichtung nach Anspruch 11 geladen werden kann, und das Programmelemente zum Durchführen von Schritten des Verfahrens nach einem der Ansprüche 1-10 bei Ausführung des Computerprogramms durch die Computereinheit umfasst.

14. Computerlesbares Medium, auf dem Programmelemente gespeichert sind, die durch eine Computereinheit in Kommunikation mit einer Vorrichtung nach Anspruch 11 gelesen und ausgeführt werden können, um bei Ausführung der Programmelemente durch die Computereinheit Schritte des Verfahrens nach einem der Ansprüche 1-10 durchzuführen.

## Revendications

1. Procédé de commande d'une unité (4) d'affichage de réalité virtuelle, comprenant des stades :
- on suit (stade I) l'environnement (E) d'un espace entourant l'unité (4) d'affichage de réalité virtuelle,
- on identifie et on sépare (stade II) automatiquement des objets (2, 2a, 2b, 2c, 2d, 2e) de monde réel de l'environnement (E) suivi en formant des objets (V, V1, V2, V3, V4, V5, V6, V7) virtuels et en fournissant des étiquettes (L, L1, L2, L3, L4, L5) individuelles d'identification aux objets (V, V1, V2, V3, V4, V5, V6, V7) virtuels,
- on classe (stade III), les objets (V, V1, V2, V3, V4, V5, V6, V7) virtuels ensemble avec leurs étiquettes (L, L1, L2, L3, L4, L5) individuelles d'identification dans une bibliothèque (OL) d'objets,
- marquage (stade IV) d'un certain nombre d'objets (V, V1, V2, V3, V4, V5, V6, V7) virtuels par un utilisateur de l'unité (4) d'affichage de réalité virtuelle et/ou automatiquement par liaison d'un marqueur (R) individuel de pertinence à chaque objet (V, V1, V2, V3, V4, V5, V6, V7) virtuel,
dans lequel les objets (V, V1, V2, V3, V4, V5, V6, V7) virtuels sont marqués par des marqueurs (R) de pertinence, dans lequel une pertinence de chaque objet (V, V1, V2, V3, V4, V5, V6, V7) virtuel peut être déduite directement de son marqueur de pertinence,
- on affiche (stade V) les objets (V, V1, V2, V3, V4, V5, V6, V7) virtuels de la bibliothèque (OL) d'objets par l'unité (4) d'affichage de réalité virtuelle en fonction de leurs marqueurs (R) de pertinence,
dans lequel un « monde réel » environnant est invisible à l'utilisateur,
**caractérisé en ce que** le marqueur (R) de pertinence de chaque objet virtuel a plus de deux états possibles, **en ce que** dans le (stade V) d'affichage, les objets (V, V1, V2, V3, V4, V5, V6, V7) virtuels de la bibliothèque (OL) d'objets sont montrés par l'unité (4) d'affichage de réalité virtuelle en des formes différentes, ou pas du tout, en fonction de leur pertinence,
et **en ce qu'**un objet (V, V1, V2, V3, V4, V5, V6, V7) virtuel n'est pas montré, si sa pertinence en-dessous d'une valeur définie à l'avance,
l'objet (V, V1, V2, V3, V4, V5, V6, V7) virtuel est montré avec une texture définie à l'avance, si sa pertinence se trouve dans une première plage de valeurs, et
l'objet (V, V1, V2, V3, V4, V5, V6, V7) virtuel est montré sous la forme d'une image de l'objet de monde réel, si sa pertinence se trouve dans une deuxième plage de valeurs.

2. Procédé suivant la revendication 1, dans lequel, afin de suivre l'environnement (E) d'un espace entourant l'unité (4) d'affichage de réalité virtuelle, on effectue un balayage par une grille de superposition de défaut d'un motif lumineux, dans lequel, de préférence, on projette une grille infrarouge sur l'environnement (E) de l'espace, et dans lequel, de préférence, des objets (2, 2a, 2b, 2c, 2d, 2e) du monde réel existant dans l'espace sont montrés par la grille de superposition de défaut dans l'unité (4) d'affichage de réalité virtuelle.

3. Procédé suivant l'une quelconque des revendications précédentes, comprenant les stades :
- on vérifie si l'environnement (E) de l'espace suivi ou de l'environnement à suivre a été suivi auparavant et, si c'est le cas,
- on recherche une bibliothèque (OL) d'objets existante d'objets (V, V1, V2, V3, V4, V5, V6, V7) virtuels de cet espace, et on utilise ces objets (V, V1, V2, V3, V4, V5, V6, V7) virtuels dans le cas où la recherche est positive.

4. Procédé suivant la revendication 3, dans lequel, dans le cas où la recherche d'une bibliothèque (OL) d'objets existante est positive et où un objet (2, 2a, 2b, 2c, 2d, 2e) de monde réel a été suivi à la position d'un objet (V, V1, V2, V3, V4, V5, V6, V7) virtuel de la librairie (OL) d'objets et est identifié comme cet objet (V, V1, V2, V3, V4, V5, V6, V7) virtuel, on recherche un marqueur (R) de pertinence mis en mémoire de cet objet (V, V1, V2, V3, V4, V5, V6, V7) virtuel et on affecte ce marqueur (R) de pertinence automatiquement à l'objet (V, V1, V2, V3, V4, V5, V6, V7) virtuel de la bibliothèque (OL) d'objets.

5. Procédé suivant l'une quelconque des revendications précédentes, dans lequel on suit, au moins une fois, l'environnement (E) de l'espace entourant l'unité (4) d'affichage de la réalité virtuelle,
dans lequel le suivi, de préférence
- est effectué avec une position différente de l'unité (4) d'affichage de réalité virtuelle dans l'espace et/ou avec un angle de vue différent de l'unité (4) d'affichage de réalité virtuelle, et/ou
- est vérifié si la géométrie des objets (V, V1, V2, V3, V4, V5, V6, V7) virtuels de la bibliothèque (OL) d'objets correspond à la géométrie des objets (2, 2a, 2b, 2c, 2d, 2e) respectifs de monde réel et/ou
- est utilisé pour identifier et séparer automatiquement d'autres objets (2, 2a, 2b, 2c, 2d, 2e) de monde réel de l'environnement (E) suivi en formant des objets (V, V1, V2, V3, V4, V5, V6, V7) virtuels et en procurant une étiquette (L, L1, L2, L3, L4, L5) individuelle d'identification aux nouveaux objets (V, V1, V2, V3, V4, V5, V6, V7) virtuels identifiés

6. Procédé suivant l'une quelconque des revendications précédentes, dans lequel le marquage d'objets (V, V1, V2, V3, V4, V5, V6, V7) virtuels est effectué par un utilisateur de l'unité (4) d'affichage de réalité virtuelle, et les objets (V, V1, V2, V3, V4, V5, V6, V7) virtuels à marquer
- sont montrés comme éléments de la bibliothèque (OL) d'objets et/ou
- sont affichés par l'unité (4) d'affichage de réalité virtuelle, de préférence dans une position correspondant à la position des objets (2, 2a, 2b, 2c, 2d, 2e) respectifs de monde réel dans l'environnement (E) et/ou, de préférence, comme image de l'objet (2, 2a, 2b, 2c, 2d, 2e) de monde réel ou comme image d'un objet artificiel.

7. Procédé suivant l'une quelconque des revendications précédentes, dans lequel les objets (V, V1, V2, V3, V4, V5, V6, V7) virtuels de la bibliothèque (OL) d'objets sont montrés par l'unité (4) d'affichage de réalité virtuelle pour le marquage et/ou ne sont pas montrés par l'unité (4) d'affichage de réalité virtuelle avant marquage et sont marqués indépendamment de l'affichage de l'unité (4) d'affichage de réalité virtuelle, dans lequel il est préféré qu'un utilisateur puisse commuté entre deux possibilités de marquage.

8. Procédé suivant l'une quelconque des revendications précédentes, dans lequel on effectue le marquage par suivi visuel, par toucher, par un dispositif d'entrée, avec des gestes ou des instructions verbales.

9. Procédé suivant l'une quelconque des revendications précédentes, dans lequel, en fonction de sa pertinence, on montre un objet (V, V1, V2, V3, V4, V5, V6, V7) virtuel sous la forme d'un flux vidéo en temps réel de l'objet (2, 2a, 2b, 2c, 2d, 2e) de monde réel, dans lequel on met, de préférence, ce flux vidéo en correspondance avec l'objet (2, 2a, 2b, 2c, 2d, 2e) de monde réel.

10. Procédé suivant l'une quelconque des revendications précédentes, dans lequel on montre des objets (V6, V7) virtuels supplémentaires, par l'unité (4) d'affichage de réalité virtuelle, ensemble avec les objets (V, V1, V2, V3, V4, V5) virtuels correspondant aux objets (2, 2a, 2b, 2c, 2d, 2e) de monde réel, les objets (V6, V7) virtuels supplémentaires n'appartenant pas à l'environnement (E) de l'espace.

11. Dispositif (1) de commande d'une unité (4) d'affichage de réalité virtuelle, comprenant :
- une unité (6) de suivi conçue pour suivre (stade I) l'environnement (E) d'un espace entourant l'unité (4) d'affichage de réalité virtuelle,
- une unité (7) d'identification conçue pour identifier et séparer automatiquement (stade II) des objets (2, 2a, 2b, 2c, 2d, 2e) de monde réel de l'environnement (E) suivi, en formant des objets (V, V1, V2, V3, V4, V5, V6, V7) virtuels et en procurant des étiquettes (L, L1, L2, L3, L4, L5) individuelles d'identification aux objets (V, V1, V2, V3, V4, V5, V6, V7) virtuels,
- une unité (8) de classement conçue pour placer (stade III) les objets (V, V1, V2, V3, V4, V5, V6, V7) virtuels ensemble avec leurs étiquettes (L, L1, L2, L3, L4, L5) individuelles d'identification dans une bibliothèque (OL) d'objets,
- une unité (9) de marquage conçue pour marquer (stade IV) un certain nombre d'objets (V, V1, V2, V3, V4, V5, V6, V7) virtuels par un utilisateur de l'unité (4) d'affichage de réalité virtuelle, et/ou pour relier automatiquement un marquer (R) individuel de pertinence à chaque objet (V, V1, V2, V3, V4, V5, V6, V7) virtuel,
dans lequel les objets (V, V1, V2, V3, V4, V5, V6, V7) virtuels sont marqués par des marqueurs (R) de pertinence,
dans lequel une pertinence de chaque objet (V, V1, V2, V3, V4, V5, V6, V7) virtuel peut être déduite directement de son marqueur de pertinence,
- une interface (5) de données conçue pour communiquer avec l'unité (4) d'affichage de réalité virtuelle, de façon à afficher (stade V) les objets (V, V1, V2, V3, V4, V5, V6, V7) virtuels de la bibliothèque (OL) d'objets par l'unité (4) d'affichage de réalité virtuelle en fonction de leurs marqueurs (R) de pertinence
dans lequel un « monde réel » environnant est invisible à l'utilisateur,
**caractérisé en ce que** le marqueur (R) de pertinence de chaque objet virtuel a plus de deux états possibles, **en ce que** l'interface (5) de données est conçue pour communiquer avec l'unité (4) d'affichage de réalité virtuelle, de manière à afficher (stade V),
les objets (V, V1, V2, V3, V4, V5, V6, V7) virtuels de la bibliothèques (OL) d'objets par l'unité (4) d'affichage de réalité virtuelle dans des formes différentes ou pas du tout, en fonction de leur pertinence,
et de manière à ce qu'un objet (V, V1, V2, V3, V4, V5, V6, V7) virtuel ne soit pas montré, si sa pertinence est en-dessous d'une valeur définie à l'avance,
l'objet (V, V1, V2, V3, V4, V5, V6, V7) virtuel est montré avec une texture définie à l'avance, si sa pertinence est dans une première plage de valeurs, et
l'objet (V, V1, V2, V3, V4, V5, V6, V7) virtuel est montré sous la forme d'une image de l'objet de monde réel, si sa pertinence est dans une deuxième plage de valeurs.

12. Unité (4) d'affichage de réalité virtuelle comprenant un dispositif (1) suivant la revendication 11, les éléments du dispositif (1) étant disposés, de préférence, dans le boîtier de l'unité (4) d'affichage de réalité virtuelle.

13. Produit de programme d'ordinateur comprenant un programme d'ordinateur, qui peut être chargé directement dans une mémoire d'une unité informatique en communication avec un dispositif suivant la revendication 11, et qui comprend des éléments de programme pour effectuer des stades du procédé suivant l'une quelconque des revendications 1 à 10, lorsque le programme d'ordinateur est exécuté par l'unité informatique.

14. Support, déchiffrable par ordinateur, sur lequel est mis en mémoire des éléments de programme, qui peuvent être déchiffrés et exécutés par une unité informatique en communication avec un dispositif suivant la revendication 11, afin d'effectuer des stades du procédé suivant l'une quelconque des revendications 1 à 10, lorsque les éléments de programme sont exécutés par l'unité informatique.
